# EUROPEAN PATENT APPLICATION

(11) **EP 2 763 011 A1**
(43) Date of publication of application: **06.08.2014**
(21) Application number: 12835749.8
(22) Date of filing: 18.09.2012
(51) Int. Cl.: G06F 3/048, G06F 3/041

(54) **PORTABLE ELECTRONIC APPARATUS, TOUCH REGION SETTING METHOD, AND TOUCH REGION SETTING PROGRAM**

(30) Priority: 27.09.2011 JP 2011210586
(71) Applicant: NEC CASIO Mobile Communications, Ltd., Kawasaki-shi, Kanagawa 211-8666 (JP)
(72) Inventor: YAGIHASHI, Ayumu, Kawasaki-shi Kanagawa 211-8666 (JP); KATO, Yumi, Kawasaki-shi Kanagawa 211-8666 (JP); AOKI, Hiroyuki, Kawasaki-shi Kanagawa 211-8666 (JP); MURAYAMA, Atsuhiko, Kawasaki-shi Kanagawa 211-8666 (JP); SUGAHARA, Seiji, Tokyo 140-0002 (JP)
(74) Representative: Vossius & Partner
(86) International application number: PCT/JP2012/073838
(87) International publication number: WO 2013/047271

(57) **Abstract**

A supporting-point position detecting unit detects a supporting-point position of a thumb when the finger moves in a state in which a portable electronic apparatus (portable information apparatus) is held, and a finger length acquiring unit acquires a length of the thumb. Then, an application processing unit sets a touch region (for example, a display region of an icon of a push button) in which a touch operation serving as a predetermined input operation is received within a movable range of the finger obtained based on the supporting-point position of the thumb and the length of the thumb in a region in which the touch sensor is able to detect a touch.

## Description

### TECHNICAL FIELD

The present invention relates to a portable electronic apparatus, a touch region setting method, and a touch region setting program.

### BACKGROUND ART

In a portable electronic apparatus with a touch sensor such as a touch panel or a touchpad, several methods of enabling an operation to be easily performed with a hand with which the portable electronic apparatus is held have been proposed.

For example, the portable terminal disclosed in Patent Document 1 is a portable terminal having a touch panel which includes an arranging means configured to arrange an item which is a key or an icon on the touch panel and further includes a sensor configured to detect a position of a finger of an operating user on the touch panel or at the periphery of the touch panel, wherein the arranging means arranges the item in the vicinity of the position of the finger according to the position of the finger of the operating user detected by the sensor.

In this manner, the item is arranged in the vicinity of the position of the finger so that the user can easily operate the portable electronic apparatus.

### [Document of the prior art]

### [Patent Document]

### [Patent Document 1]

Japanese Unexamined Patent Application, First Publication No. 2010-20601

### DISCLOSURE OF INVENTION

### [Problems to be solved by the invention]

When a touch region (the "item" in Patent Document 1) in which a touch operation serving as a predetermined input operation is received is set (arranged) in the portable electronic apparatus, it is possible to more appropriately set the touch region if a region operable with a hand with which the portable electronic apparatus is held is more accurately identified.

For example, when the operable region is wide, it is possible to display more icons or display each icon in a larger size within the region.

An object of the present invention is to provide a portable electronic apparatus, a touch region setting method, and a touch region setting program capable of solving the above-described problem.

### [Means for solving the problem]

The present invention has been made to solve the above-described problem, and a portable electronic apparatus according to an embodiment of the present invention is a portable electronic apparatus including: a touch sensor configured to detect a touch position; a supporting-point position detecting unit configured to detect a supporting-point position of a user's finger when the finger moves in a state in which the portable electronic apparatus is held; a finger length acquiring unit configured to acquire the length of the finger; and a touch region setting unit configured to set a touch region in which a touch operation serving as a predetermined input operation is received within a movable range of the finger obtained based on the supporting-point position of the finger and the length of the finger in a region in which the touch sensor is able to detect a touch.

In addition, a touch region setting method according to an embodiment of the present invention is a touch region setting method of a portable electronic apparatus having a touch sensor configured to detect a touch position, the touch region setting method including: a supporting-point position detecting step of detecting a supporting-point position of a user's finger when the finger moves in a state in which the portable electronic apparatus is held; a finger length acquiring step of acquiring the length of the finger; and a touch region setting step of setting a touch region in which a touch operation serving as a predetermined input operation is received within a movable range of the finger obtained based on the supporting-point position of the finger and the length of the finger in a region in which the touch sensor is able to detect a touch.

In addition, a touch region setting program according to an embodiment of the present invention is a touch region setting program for causing a computer serving as a portable electronic apparatus having a touch sensor configured to detect a touch position to execute: a supporting-point position detecting step of detecting a supporting-point position of Ea user's finger when the finger moves in a state in which the portable electronic apparatus is held; a finger length acquiring step of acquiring the length of the finger; and a touch region setting step of setting a touch region in which a touch operation serving as a predetermined input operation is received within a movable range of the finger obtained based on the supporting-point position of the finger and the length of the finger in a region in which the touch sensor is able to detect a touch.

### [Effects of the Invention]

According to the present invention, a touch region in which a touch operation serving as a predetermined input operation is received can be more appropriately set.

### BRIEF DESCRIPTION OF THE DRAWINGS

FIG. 1 is a block diagram illustrating a functional configuration of a portable terminal apparatus in a first embodiment of the present invention.
FIG. 2 is a perspective view illustrating an outline of an exterior of the portable terminal apparatus in the first embodiment of the present invention viewed from a front surface side.
FIG. 3 is a diagram illustrating an example of a movable range of a thumb acquired by a movable range acquiring unit in the first embodiment of the present invention.
FIG. 4 is a flowchart illustrating an operation when the movable range acquiring unit acquires the movable range of the thumb in the first embodiment of the present invention.
FIG. 5 is a flowchart illustrating an operation when an application processing unit causes a display screen of a display unit to display an icon representing a touch region in the first embodiment of the present invention.
FIG. 6 is a block diagram illustrating a functional configuration of a portable terminal apparatus in a second embodiment of the present invention.
FIG. 7 is a perspective view illustrating an exterior of the portable terminal apparatus in the second embodiment of the present invention viewed from a front surface side.
FIG. 8 is a perspective view illustrating an exterior of the portable terminal apparatus in the second embodiment of the present invention viewed from a rear surface side.
FIG. 9 is a diagram illustrating an example of a movable range of a user's finger acquired by a movable range acquiring unit in the second embodiment of the present invention.
FIG. 10 is a diagram illustrating an example of a state in which a palm of a left hand is in contact with an edge of a housing rear surface in the second embodiment of the present invention.
FIG. 11 is a diagram illustrating an example of a touch region in which a display screen of a first display unit is configured as a front surface and a display screen of a second display unit is configured as a rear surface in the second embodiment of the present invention.
FIG. 12 is a diagram illustrating an example in which a touch region in which a position in the display screen of the first display unit is designated is set on the display screen of the second display screen in the second embodiment of the present invention.

### EMBODIMENTS FOR CARRYING OUT THE INVENTION

### <First embodiment>

Hereinafter, the first embodiment in a portable terminal apparatus according to the present invention will be described with reference to the drawings. The present invention is applicable to various portable terminal apparatuses such as a mobile phone and a portable information terminal apparatus. However, an application range of the present invention is not limited to the portable terminal apparatus. For example, the present invention can be applied to various portable information apparatuses such as an independent (that is, a non-terminal type) game machine or an electronic dictionary.

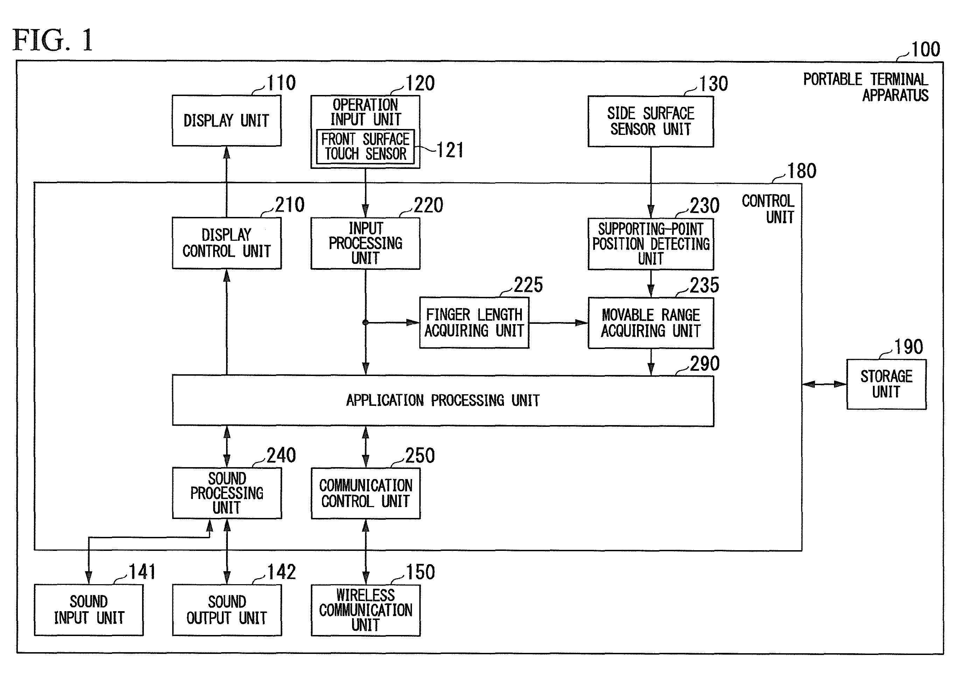

FIG. 1 is a block diagram illustrating a functional configuration of the portable terminal apparatus in the first embodiment of the present invention. In FIG. 1, the portable terminal apparatus 100 includes a display unit 110, an operation input unit 120, a side surface sensor unit 130, a sound input unit 141, a sound output unit 142, a wireless communication unit 150, a control unit 180, a storage unit 190, and a central processing unit (CPU) (not illustrated). The operation input unit 120 includes a front surface touch sensor (touch sensor) 121. The control unit 180 includes a display control unit 210, an input processing unit 220, a user's finger length acquiring unit 225, a supporting-point position detecting unit 230, a movable range acquiring unit 235, a sound processing unit 240, a communication control unit 250, and an application processing unit (touch region setting unit) 290.

The portable terminal apparatus 100, for example, may be a portable information terminal apparatus, and provides various types of functions such as an Internet browsing function and an electronic mail function according to a user's operation.

The display unit 110, for example, has a display screen such as a liquid crystal display or an organic electro-luminescence (EL) display, and can display various types of images such as a moving image, a still image, and text (characters) according to control of the display control unit 210.

The operation input unit 120 receives the user's operation on a front surface touch sensor 121 provided on the display screen of the display unit 110. That is, the display screen of the display unit 110 and the touch sensor 121 of the operation input unit 120 constitute a touch panel.

Upon detecting a touch operation on the display screen of the display unit 110, the operation input unit 120 outputs a signal representing a touch position (a position touched on the display screen) to the input processing unit 220.

The sound input unit 141 has a microphone, collects an ambient sound, converts the collected ambient sound into a sound signal, and outputs the sound signal to the sound processing unit 240.

The sound output unit 142 has a speaker, converts a sound signal output in an analog electrical signal from the sound processing unit 240 into sound, and outputs the sound.

The side surface sensor unit 130 has a sensor provided on a housing side surface of the portable terminal apparatus 100 and detects a position of a hand of the user in contact with the housing side surface when the user holds the housing of the portable terminal apparatus 100. For example, the side surface sensor unit 130 has a conductive sensor and detects the position of the hand of the user by detecting conduction of an electric current in the user's hand when the user's hand is in contact with the conductive sensor. However, the sensor of the side surface sensor unit 130 is not limited to the conductive sensor, and may be any sensor capable of detecting the position of the hand of the user. For example, the side surface sensor unit 130 may have a pressure sensor, and may be configured to detect the position of the hand of the user by detecting a pressure applied from the user's hand with which the housing of the portable terminal apparatus 100 is held.

The wireless communication unit 150 is connected to a mobile phone communication network (a wireless communication network for a mobile phone provided by a communication provider) by communicating with a wireless base station. Specifically, the wireless communication unit 150 performs a modulation process on a signal output from the communication control unit 250 to transmit the modulated signal in a wireless signal and performs a demodulation process on a received wireless signal to output the demodulated signal to the communication control unit 250. For example, the wireless communication unit 150 transmits and receives electronic mail data in a wireless signal.

The control unit 180 controls the respective units of the portable terminal apparatus 100 to execute various types of functions. The control unit 180, for example, is implemented by causing a CPU (not illustrated) of the portable terminal apparatus 100 to read a program from a memory provided in the portable terminal apparatus 100 and execute the read program.

The display control unit 210 controls the display unit 110 to display various types of images. Specifically, the display control unit 210 causes the display screen of the display unit 110 to display an image by generating a screen display signal to output the generated signal to the display unit 110 based on moving-image data, still-image data, text data, or the like output from the application processing unit 290.

The input processing unit 220 outputs a signal according to an operation received by the operation input unit 120 to the application processing unit 290.

For example, when a signal representing a touch position on the display screen of the display unit 110 is output from the operation input unit 120 in a state in which the display unit 110 displays an icon, the input processing unit 220 determines whether the icon has been touched. Then, upon determining that the icon has been touched, the input processing unit 220 outputs information representing the touched icon to the application processing unit 290. Also, the icon described here is an image which symbolizes a thing serving as a selection target or a designation target such as a file, a folder, an application program, or a function.

The finger length acquiring unit 225 acquires a length of a thumb of the user. For example, the portable terminal apparatus 100 has a thumb length input mode in which an input of the length of the thumb is received, and the finger length acquiring unit 225 writes the length of the thumb to the storage unit 190 by detecting the length of the thumb input in handwriting in units of centimeters (cm) on the display screen of the display unit 110 in the thumb length input mode. Then, the finger length acquiring unit 225 acquires the length of the thumb by reading the length of the thumb from the storage unit 190.

The supporting-point position detecting unit 230 detects a supporting-point position of the thumb when the thumb moves in a state in which the user holds the portable terminal apparatus 100. A method in which the supporting-point position detecting unit 230 detects the supporting-point position of the thumb will be described later.

The movable range acquiring unit 235 obtains a coverage range of the thumb of the hand holding the housing of the portable terminal apparatus 100 in a region in which the front surface touch sensor 121 of the operation input unit 120 can detect the touch.

Hereinafter, the coverage range of the thumb of the hand holding the housing of the portable terminal apparatus 100 is referred to as a "movable range of the thumb." In addition, a coverage range of any finger is referred to as a "movable range of the finger." The movable range acquiring unit 235 obtains the movable range of the thumb based on the supporting-point position of the thumb detected by the supporting-point position detecting unit 230 and the length of the thumb acquired by the finger length acquiring unit 225.

The sound processing unit 240 causes the sound output unit 142 to output sound by converting sound data output from the application processing unit 290 into an electrical signal and outputting the electrical signal to the sound output unit 142. In addition, the sound processing unit 240 converts the electrical signal output after the sound input unit 141 has collected sound into sound data and outputs the sound data to the application processing unit 290.

The communication control unit 250 performs a process of encoding and the like on data output from the application processing unit 290, and causes the encoded data to be modulated and transmitted in a wireless signal by outputting the encoded data to the wireless communication unit 150. In addition, the communication control unit 250 extracts data by performing a process of decoding and the like on a signal received and demodulated by the wireless communication unit 150 and outputs the data to the application processing unit 290. For example, the communication control unit 250 performs a process of encoding and the like on electronic mail data output from the application processing unit 290 to output the encoded data to the wireless communication unit 150, and performs a process of decoding and the like on a signal received and demodulated by the wireless communication unit 150 to extract data such as electronic mail data, and outputs the extracted data to the application processing unit 290.

The application processing unit 290 provides various types of functions such as an Internet browsing function and an electronic mail function by executing an application (that is, by executing an application program).

In particular, the application processing unit 290 sets a touch region in which a touch operation serving as a predetermined input operation is received within the movable range of the thumb obtained by the movable range acquiring unit 235 in a region in which the front surface touch sensor 121 of the operation input unit 120 can detect the touch. For example, the application processing unit 290 causes the icon serving as a push button (input key) for receiving the user's input operation to be displayed within the movable range of the thumb on the display screen of the display unit 110.

The storage unit 190, for example, is implemented in a storage region of a memory provided in the portable terminal apparatus 100, and stores various types of data. In particular, the storage unit 190 stores the length of the thumb detected by the finger length acquiring unit 225. In addition, the storage unit 190 stores various types of programs to be executed by the CPU provided in the portable terminal apparatus 100 in advance.

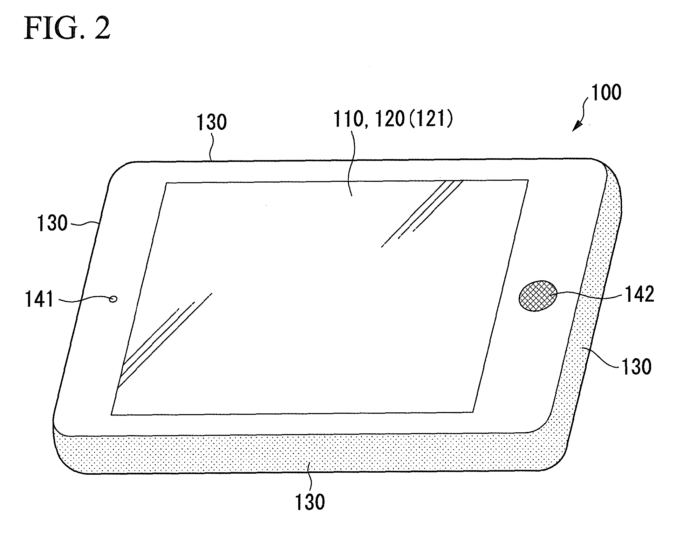

FIG. 2 is a perspective view illustrating an outline of an exterior of the portable terminal apparatus 100 viewed from a front surface side. In FIG. 2, a touch panel type display screen constituted of the display screen of the display unit 110 and the touch sensor (front surface touch sensor 121) of the operation input unit 120, a microphone of the sound input unit 141, and a speaker of the sound output unit 142 are provided on a housing front surface of the portable terminal apparatus 100. In addition, the sensor of the side surface sensor unit 130 is provided on each side surface of the housing of the portable terminal apparatus 100.

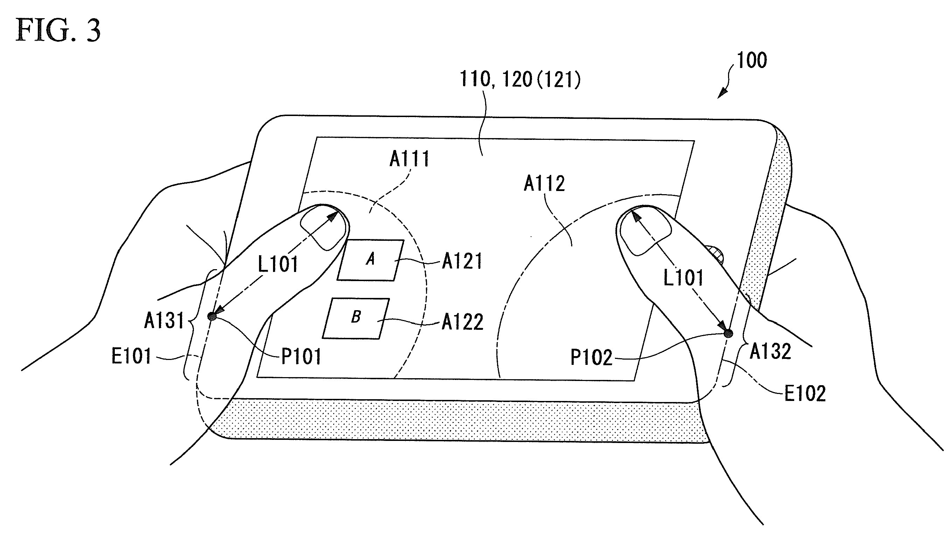

Next, the supporting-point position of the thumb detected by the supporting-point position detecting unit 230 and the movable range of the thumb acquired by the movable range acquiring unit 235 will be described with reference to FIG. 3.

FIG. 3 is a diagram illustrating an example of the movable range of the thumb acquired by the movable range acquiring unit 235. In FIG. 3, an example when the user holds the housing of the portable terminal apparatus 100 with both hands and operates a touch panel of a housing front surface with the thumb is illustrated.

An edge E101 is an edge of a left-hand side in the housing front surface of the portable terminal apparatus 100. In addition, an edge E102 is an edge of a right-hand side in the housing front surface of the portable terminal apparatus 100.

A point P101 is a supporting-point position of a left thumb detected by the supporting-point position detecting unit 230. In addition, a point P102 is a supporting-point position of a right thumb detected by the supporting-point position detecting unit 230.

A length L101 represents a length of the thumb acquired by the finger length acquiring unit 225.

A region A111 is a movable range of the left thumb acquired by the movable range acquiring unit 235. In addition, a region A112 is a movable range of a right thumb acquired by the movable range acquiring unit 235.

In addition, regions A121 and A122 are touch regions represented by icons displayed by the application processing unit 290 on the display screen of the display unit 110.

In addition, a region A131 is a region in contact with the left thumb in the edge E101. In addition, a region A132 is a region in contact with the right thumb in the edge E102.

Here, the supporting-point position detecting unit 230 detects the supporting-point position (point P101) of the left thumb and the supporting-point position (point P102) of the right thumb based on the position of the hand of the user detected by the side surface sensor unit 130.

For example, the supporting-point position detecting unit 230 acquires a position of the region A131 in contact with the edge E101 among positions of the hand of the user detected by the side surface sensor unit 130, for example, in coordinates in the housing front surface of the portable terminal apparatus 100. Then, the supporting-point position detecting unit 230 detects the center of the region A131 (the center point of a line segment) as the supporting-point position (point P101) of the left thumb.

Likewise, the supporting-point position detecting unit 230 acquires a position of the region A132 in contact with the edge E102 among the positions of the hand of the user detected by the side surface sensor unit 130. Then, the supporting-point position detecting unit 230 detects the center of the region A132 as the supporting-point position (point P102) of the right thumb.

In addition, the movable range acquiring unit 235 acquires (sets) a region (region A111) overlapping a circle in which the supporting-point position (point P101) of the left thumb is designated as the center and a radius is a length (length L101) of the thumb in the region (that is, a region in which the operation input unit 120 can detect the touch) of the display screen of the display unit 110 as the movable range of the left thumb.

Likewise, the movable range acquiring unit 235 acquires (sets) a region (region A112) overlapping a circle in which the supporting-point position (point P102) of the right thumb is designated as the center and a radius is a length (length L101) of the thumb in the region of the display screen of the display unit 110 as the movable range of the right thumb.

Then, the application processing unit 290 sets a touch region in which a touch operation serving as a predetermined input operation is received within the movable range of the left thumb or within the movable range of the right thumb in the region of the display screen of the display unit 110. In the example of FIG. 3, the application processing unit 290 causes an icon A121 of a push button A and an icon A122 of a push button B to be displayed within the movable range of the left thumb. Then, the display regions of the icons are set in a touch region in which the touch operation for pressing the push button is received.

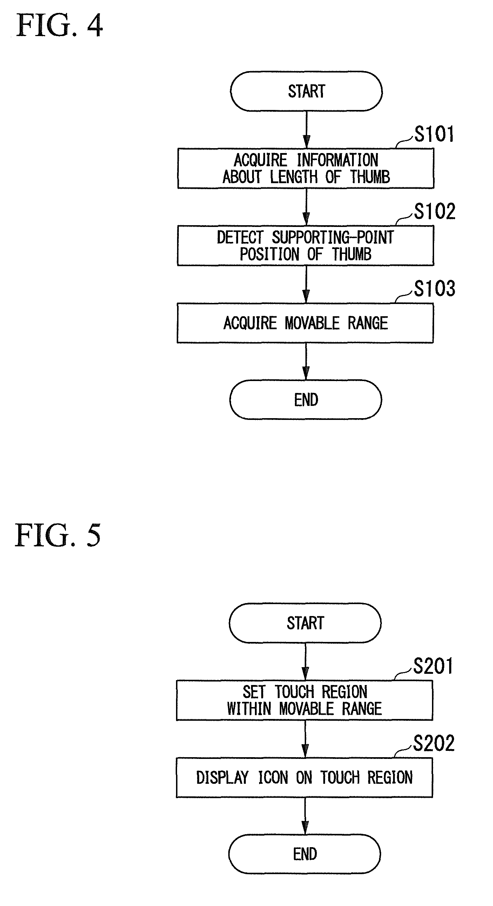

Next, the operation of the portable terminal apparatus 100 will be described with reference to FIGS. 4 and 5.

FIG. 4 is a flowchart illustrating an operation of the portable terminal apparatus 100 when the movable range acquiring unit 235 acquires the movable range of the thumb. The portable terminal apparatus 100, for example, starts the process of FIG. 4 at the initiation of execution of an application.

In the process of FIG. 4, first, the finger length acquiring unit 225 acquires the length of the thumb by reading information representing the length of the thumb from the storage unit 190 (step S101).

Next, the supporting-point position detecting unit 230 detects the supporting-point position of the thumb based on the position of the hand of the user detected by the side surface sensor unit 130 as described with reference to FIG. 3 (step S102).

Here, when the user holds the housing of the portable terminal apparatus 100 with both hands, the side surface sensor unit 130 detects positions in contact with the user's hands on both the left-hand side and the right-hand side, and the supporting-point position detecting unit 230 detects supporting-point positions of the thumbs on both the left hand and the right hand.

Meanwhile, when the user holds the housing of the portable terminal apparatus 100 with one hand, the side surface sensor unit 130 detects a position in contact with the user's hand only on the side of the hand, and the supporting-point position detecting unit 230 detects the supporting-point position of the thumb in the hand. For example, when the user holds the housing of the portable terminal apparatus 100 with only the right hand, the side surface sensor unit 130 detects a position in contact with the user's hand only on the right side of the housing (the side of the edge E102 in the example of FIG. 3), and the supporting-point position detecting unit 230 detects the supporting-point position of the right thumb based on the detected position.

Next, the movable range acquiring unit 235 acquires the movable range of the thumb in the region of the display screen of the display unit 110 based on the length of the thumb acquired by the finger length acquiring unit 225 and the supporting-point position of the thumb acquired by the supporting-point position detecting unit 230 (step S103).

Here, when the supporting-point position detecting unit 230 has detected the supporting-point positions of the thumbs for both of the left and right hands in step S102, the movable range acquiring unit 235 acquires the movable ranges of the thumbs for both of the left and right hands. Meanwhile, when the supporting-point position detecting unit 230 has detected the supporting-point position of the thumb for one hand, the movable range acquiring unit 235 acquires the movable range of the thumb of the hand.

Thereafter, the process of FIG. 4 ends.

Also, a timing at which the portable terminal apparatus 100 starts the process of FIG. 4 is not limited to the above-described application execution start time. For example, the process of FIG. 4 may start when the portable terminal apparatus 100 causes an icon of an operation key to be displayed in execution of the application. By acquiring the movable range every time the icon is displayed, the movable range acquiring unit 235 can appropriately detect the movable range of the thumb even when the user changes his or her grip on the portable terminal apparatus 100.

Accordingly, the application processing unit 290 can set the touch region at a position at which the user's touch operation is easy.

FIG. 5 is a flowchart illustrating an operation of the portable terminal apparatus 100 when the application processing unit 290 causes a display screen of the display unit 110 to display an icon representing a touch region. For example, when the icon of the operation key is displayed in the execution of the application, the portable terminal apparatus 100 starts the process of FIG. 5.

In the process of FIG. 5, first, the application processing unit 290 sets the touch region within the movable range of the thumb set by the movable range acquiring unit 235 in the region of the display screen of the display unit 110 (step S201).

Next, the application processing unit 290 acquires an image of the icon (for example, the icon of the push button) representing the touch region, and causes the acquired icon image to be displayed in the touch region set in step S201 (step S202).

For example, the application processing unit 290 acquires the icon image by reading the icon image stored by the storage unit 190 in advance and outputs an instruction signal for displaying the acquired icon image in the touch region set in step S201 to the display control unit 210. Then, the display control unit 210 controls the display unit 110 to display the acquired icon image in the touch region on the display screen according to the instruction signal.

Thereafter, the process of FIG. 5 ends.

In this manner, the finger length acquiring unit 225 acquires the length of the thumb and the supporting-point position detecting unit 230 detects the supporting-point position of the finger when the finger moves in a state in which the user holds the portable terminal apparatus 100. Then, the application processing unit 290 sets the touch region in which a touch operation serving as a predetermined input operation is received within the movable range of the finger obtained based on the supporting-point position of the thumb and the length of the thumb in the region in which the front surface touch sensor 121 of the operation input unit 120 can detect the touch.

Thereby, it is possible to more appropriately set the touch region in which the touch operation serving as the predetermined input operation is received. That is, the portable terminal apparatus 100 (movable range acquiring unit 235) can more accurately acquire the movable range of the thumb based on the length of the thumb and the supporting-point position of the thumb. Then, the portable terminal apparatus 100 (application processing unit 290) can set the touch region at a position at which the user can easily perform the touch operation by setting the touch region within the obtained movable range of the thumb.

In addition, the portable terminal apparatus 100 can prevent the touch operation from being erroneously detected by setting the touch region within the movable range of the thumb.

Here, a touch detected outside the movable range of the thumb is considered to be the user's undesired touches performed by means other than the user's finger such as a touch performed in incidental contact with a necktie or hair and the like. In particular, when the housing of the portable terminal apparatus 100 is held with both hands, a touch detected outside the movable range of the thumb is more likely to be the user's undesired touch performed by means other than the user's finger.

Therefore, the portable terminal apparatus 100 can disregard the touch detected outside the movable range (that is, does not perform a process on the touch) by limiting a position at which the touch region is set to within the movable range of the thumb, and prevent the touch operation from being erroneously detected.

### <Second embodiment>

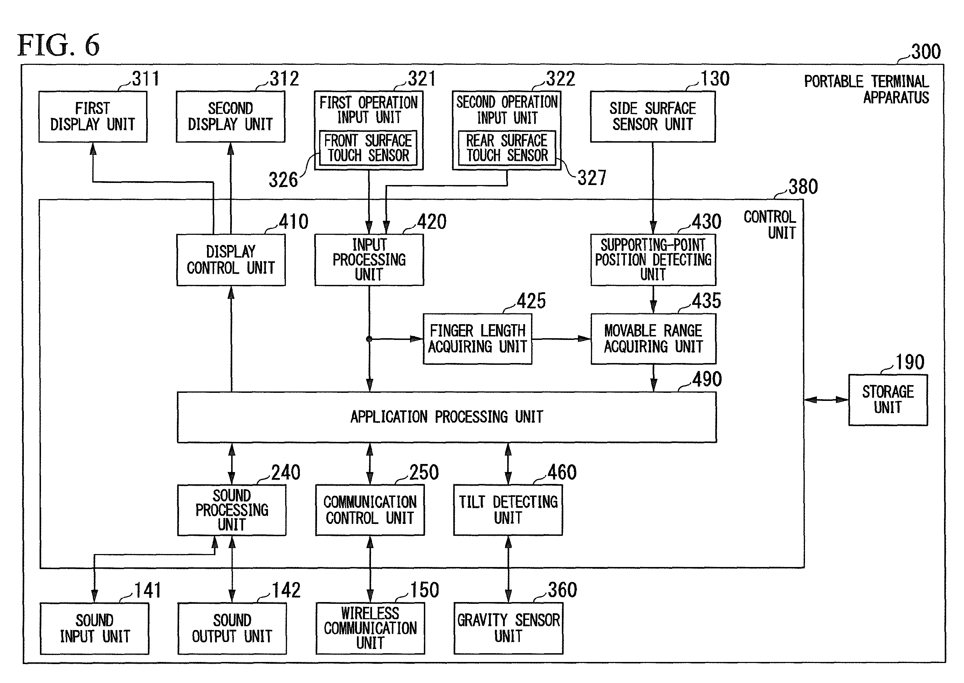

FIG. 6 is a block diagram illustrating a functional configuration of a portable terminal apparatus in the second embodiment of the present invention. In FIG. 6, the portable terminal apparatus 300 includes a first display unit 311, a second display unit 312, a first operation input unit 321, a second operation input unit 322, a side surface sensor unit 130, a sound input unit 141, a sound output unit 142, a wireless communication unit 150, a gravity sensor unit 360, a control unit 380, a storage unit 190, and a CPU (not illustrated). The first operation input unit 321 includes a front surface touch sensor 326. The second operation input unit 322 includes a rear surface touch sensor 327. The control unit 380 includes a display control unit 410, an input processing unit 420, a user's finger length acquiring unit 425, a supporting-point position detecting unit 430, a movable range acquiring unit 435, a sound processing unit 240, a communication control unit 250, a tilt detecting unit 460, and an application processing unit (a touch region setting unit and a processing unit) 490.

In FIG. 6, the same reference numerals 130, 141, 142, 150, 190, 240, and 250 are assigned to units having similar functions corresponding to those of FIG. 1, and description thereof is omitted.

Like the portable terminal apparatus 100 (FIG. 1), the portable terminal apparatus 300, for example, is a portable information terminal apparatus, and provides various types of functions such as an Internet browsing function and an electronic mail function according to the user's operation. However, the portable terminal apparatus 300 is different from the portable terminal apparatus 100 in that the touch sensor (rear surface touch sensor 327) is also provided on the rear surface.

The first display unit 311, for example, has a display screen such as a liquid crystal display or an organic EL display on a housing front surface of the portable terminal apparatus 300, and can display various types of images such as a moving image, a still image, and text (characters) according to control of the display control unit 410.

The second display unit 312, for example, has a display screen such as a liquid crystal display or an organic EL display on a housing rear surface of the portable terminal apparatus 300, and can display various types of images such as a moving image, a still image, and text (characters) according to control of the display control unit 410.

The first operation input unit 321 has a touch sensor (front surface touch sensor 326) provided on the display screen of the first display unit 311 and receives the user's operation. That is, the display screen of the first display unit 311 and the front surface touch sensor 326 of the first operation input unit 321 constitute a touch panel.

Upon detecting the touch operation on the display screen of the first display unit 311, the first operation input unit 321 outputs the signal representing the touch position (the position touched on the display screen) to the input processing unit 420.

The second operation input unit 322 has a touch sensor (rear surface touch sensor 327) provided on the display screen of the second display unit 312 and receives the user's operation. That is, the display screen of the second display unit 312 and the rear surface touch sensor 327 of the second operation input unit 322 constitute a touch panel.

However, the touch sensor provided in the second operation input unit 322 may be a touch sensor of a touchpad provided on the housing rear surface of the portable terminal apparatus 300. That is, when the portable terminal apparatus 300 does not include the second display unit 312, the touchpad may be provided on the housing rear surface without providing the display screen on the housing rear surface.

Upon detecting the touch operation on the display screen of the second display unit 312, the second operation input unit 322 outputs the signal representing the touch position (the position touched on the display screen) to the input processing unit 420.

The gravity sensor unit 360 has a gravity sensor (acceleration sensor) inside the housing, and detects a vertical downward direction by detecting gravity acceleration.

The control unit 380 controls the units of the portable terminal apparatus 300 to execute various types of functions. The control unit 380, for example, is implemented by causing a CPU provided in the portable terminal apparatus 300 to read a program from a memory provided in the portable terminal apparatus 300 and execute the read program.

The display control unit 410 controls the first display unit 311 and the second display unit 312 to display various types of images. Specifically, the display control unit 410 generates a screen display signal to output the generated signal to the first display unit 311 based on moving-image data, still-image data, text data, or the like output from the application processing unit 490 and causes the display screen of the first display unit 311 to display the image. In addition, likewise, the display control unit 410 generates a screen display signal to output the generated signal to the second display unit 312 and causes the display screen of the second display unit 312 to display the image.

The input processing unit 420 outputs signals according to operations received by the first operation input unit 321 and the second operation input unit 322 to the application processing unit 490.

For example, the input processing unit 420 determines whether an icon has been touched when a signal representing a touch position in the display screen of the first display unit 311 is output from the first operation input unit 321 in a state in which the first display unit 311 displays the icon. Then, the input processing unit 420 outputs information representing the touched icon to the application processing unit 490 upon determining that the icon has been touched.

Like the finger length acquiring unit 225 of FIG. 1, the finger length acquiring unit 425 acquires a length of a thumb. In addition, the finger length acquiring unit 425 acquires the length of at least one of an index finger, a middle finger, a ring finger, and a little finger of the user.

For example, the portable terminal apparatus 300 has a user's finger length input mode in which an input of a length of each of the thumb, the index finger, the middle finger, the ring finger, and the little finger is received, and the finger length acquiring unit 425 writes the length of each finger to the storage unit 190 by detecting the length of each finger input in handwriting in units of centimeters (cm) on the display screen of the first display unit 311 in the finger length input mode. Then, the finger length acquiring unit 425 acquires the length of each finger by reading the length of each finger from the storage unit 190.

Like the supporting-point position detecting unit 230 (FIG. 1), the supporting-point position detecting unit 430 detects a supporting-point position of the thumb when the thumb moves in a state in which the user holds the portable terminal apparatus 300. The supporting-point position detecting unit 430 detects the supporting-point position of the finger when at least one of the index finger, the middle finger, the ring finger, and the little finger moves in a state in which the user holds the portable terminal apparatus 300. A method in which the supporting-point position detecting unit 430 detects the supporting-point position of the index finger, the middle finger, the ring finger, or the little finger will be described later.

Like the movable range acquiring unit 235 of FIG. 1, the movable range acquiring unit 435 obtains a movable range of the thumb in a region in which the front surface touch sensor 326 of the first operation input unit 321 can detect the touch. The movable range acquiring unit 435 obtains a coverage range of a user's finger of the hand with which the user holds the housing of the portable terminal apparatus 300 for at least one of the index finger, the middle finger, the ring finger, and the little finger in a region in which the rear surface touch sensor 327 of the second operation input unit 322 can detect the touch. Hereinafter, for the index finger, the middle finger, the ring finger, or the little finger, the coverage range of the finger of the hand holding the housing of the portable terminal apparatus 300 is referred to as a "movable range of the finger."

The movable range acquiring unit 435 obtains the movable range of the finger based on the supporting-point position of the finger detected by the supporting-point position detecting unit 430 and the length of the finger acquired by the finger length acquiring unit 425.

The tilt detecting unit 460 detects a tilt of the housing of the portable terminal apparatus 300 by calculating a difference between a reference direction in the housing of the portable terminal apparatus 300 and a vertical downward direction detected by the gravity sensor unit 360. For example, the tilt detecting unit 460 detects a tilt of a left/right direction of the housing of the portable terminal apparatus 300 by calculating the difference between the reference direction and the vertical downward direction detected by the gravity sensor unit 360 using the vertical downward direction of a time at which the housing of the portable terminal apparatus 300 horizontally stands on a horizontal surface as the reference direction in the housing of the portable terminal apparatus 300.

Like the application processing unit 290 of FIG. 1, the application processing unit 490 provides various types of functions such as an Internet browsing function and an electronic mail function by executing an application program.

Like the application processing unit 290 of FIG. 1, the application processing unit 490 sets a touch region in which a touch operation serving as a predetermined input operation is received within the movable range of the thumb obtained by the movable range acquiring unit 435 in a region in which the front surface touch sensor 326 of the first operation input unit 321 can detect the touch.

In addition, the application processing unit 490 sets a touch region in which a touch operation serving as a predetermined input operation is received within the movable range of the finger obtained by the movable range acquiring unit 435 for at least one of the index finger, the middle finger, the ring finger, and the little finger in a region in which the rear surface touch sensor 327 of the second operation input unit 322 can detect the touch.

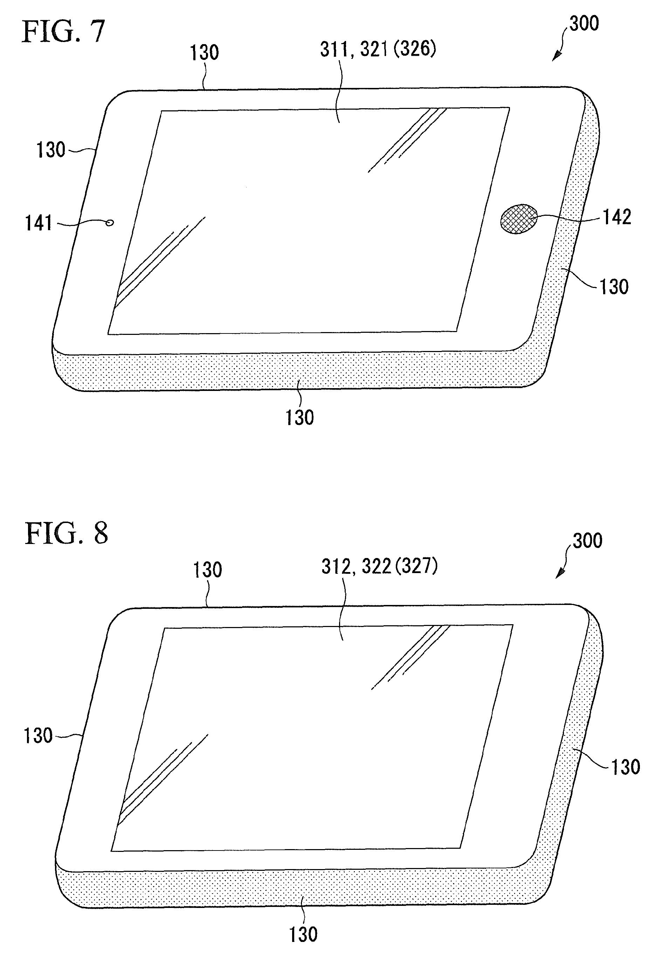

FIG. 7 is a perspective view illustrating an exterior of the portable terminal apparatus 300 viewed from a front surface side. In the exterior in FIG. 7, as in the exterior of the portable terminal apparatus 100 in FIG. 2, a touch panel type display screen constituted of the display screen of the first display unit 311 and the touch sensor (front surface touch sensor 326) of the first operation input unit 321, a microphone of the sound input unit 141, and a speaker of the sound output unit 142 are provided on a housing front surface of the portable terminal apparatus 300. In addition, the sensor of the side surface sensor unit 130 is provided on each side surface of the housing of the portable terminal apparatus 300.

FIG. 8 is a perspective view illustrating an exterior of the portable terminal apparatus 300 viewed from a rear surface side. In FIG. 8, a touch panel type display screen constituted of the display screen of the second display unit 312 and the touch sensor (rear surface touch sensor 327) of the second operation input unit 322 are provided on a housing rear surface of the portable terminal apparatus 300. In addition, as described with reference to FIG. 7, the sensor of the side surface sensor unit 130 is provided on each side surface of the housing of the portable terminal apparatus 300.

Here, the display screen of the first display unit 311 illustrated in FIG. 7 is set as the front surface side and the display screen of the second display unit 312 illustrated in FIG. 8 is arranged on its rear surface side.

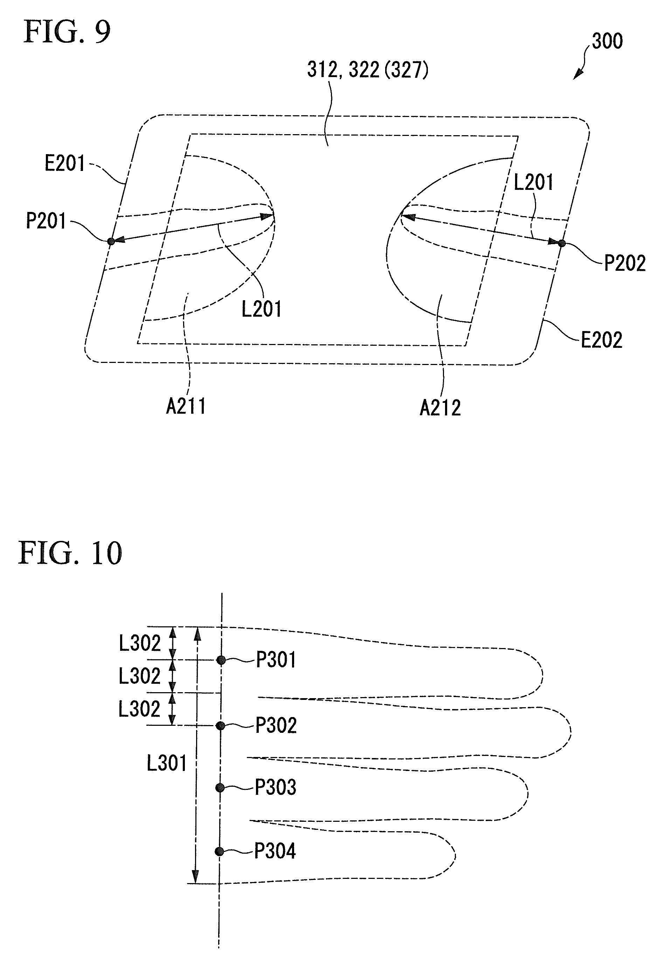

Next, the supporting-point position of the finger detected by the supporting-point position detecting unit 430 and the movable range of the finger acquired by the movable range acquiring unit 435 will be described with reference to FIG. 9.

FIG. 9 is a diagram illustrating an example of the movable range of the finger acquired by the movable range acquiring unit 435. In FIG. 9, an example when the user holds the housing of the portable terminal apparatus 300 with both hands and touches and operates a touch panel of a housing rear surface with the middle finger is illustrated.

An edge E201 is an edge of a left-hand side in the housing rear surface of the portable terminal apparatus 300. In addition, an edge E202 is an edge of a right-hand side in the housing rear surface of the portable terminal apparatus 300.

A point P201 is a supporting-point position of a left middle finger detected by the supporting-point position detecting unit 430. In addition, a point P202 is a supporting-point position of a right middle finger detected by the supporting-point position detecting unit 430.

A length L201 represents a length of the middle finger acquired by the finger length acquiring unit 425.

A region A211 is a movable range of the left middle finger acquired by the movable range acquiring unit 435. In addition, a region A212 is a movable range of the right middle finger acquired by the movable range acquiring unit 435.

For example, when the side surface sensor unit 130 has detected contact with only one finger at the edge E201 in a state in which the finger length acquiring unit 425 has acquired the length of only one of the index finger, the middle finger, the ring finger, and the little finger (that is, in a state in which the storage unit 190 stores the length of only one of the index finger, the middle finger, the ring finger, and the little finger), the supporting-point position detecting unit 430 detects the supporting-point position of the finger. Here, the finger which performs the touch operation is expected to be at a position closer to the housing main body than the other fingers for contact with the touch panel. Thus, assuming that the touch operation is performed by the finger of the contact detected by the side surface sensor unit 130, the supporting-point position detecting unit 430 is configured to detect the supporting-point position of the finger and the movable range acquiring unit 435 is configured to acquire the movable range of the finger based on the supporting-point position.

As described with reference to FIG. 3, the supporting-point position detecting unit 430 detects the center of a region in which the finger is in contact with the edge E201 as the supporting-point position (P201) of the finger.

Likewise, when the side surface sensor unit 130 has detected contact of only one finger at the edge E202 in a state in which the finger length acquiring unit 425 has acquired the length of only one of the index finger, the middle finger, the ring finger, and the little finger, the supporting-point position detecting unit 430 detects the supporting-point position of the finger.

In addition, the movable range acquiring unit 435 acquires (sets) a region (the regions A211 and A212) overlapping a circle in which a supporting-point position (the point P201 which is the supporting-point position of the left middle finger and the point P202 which is the supporting-point position of the right middle finger in the example of FIG. 9) detected by the supporting-point position detecting unit 430 is designated as the center and a radius is the length of the finger (the length L201 of the middle finger in the example of FIG. 9) acquired by the finger length acquiring unit 425 in the region in which the second operation input unit 322 can detect the touch as the movable range of the finger.

Then, the application processing unit 490 sets a touch region in which a touch operation serving as a predetermined input operation is received within the movable range of the finger set by the movable range acquiring unit 435 in a region in which the second operation input unit 322 can detect the touch. A specific example of this touch region will be described later.

Also, when the user holds the housing of the portable terminal apparatus 300 with one hand, the movable range acquiring unit 435 acquires the movable range of the finger on the side of the hand with which the housing is held as described with reference to FIG. 4.

Also, when the side surface sensor unit 130 has detected contact of four fingers at the edge E201, the supporting-point position detecting unit 430 detects the supporting-point position of each finger and the movable range acquiring unit 435 acquires the movable range of each finger. In this case, the movable range acquiring unit 435 determines an upper side in the image displayed by the first display unit 311 on the display screen as a side away from the user's body and determines the fingers as the index finger, the middle finger, the ring finger, and the little finger in order from the finger away from the user's body. Then, the movable range acquiring unit 435 acquires the movable range of each finger based on the supporting-point position of each finger and the length of each finger acquired by the finger length acquiring unit 425. The same is true for the right hand (the side of the edge E202).

In addition, when the side surface sensor unit 130 has detected contact of a palm, the supporting-point position detecting unit 430 detects the supporting-point position of each finger based on a contact position of the palm.
FIG. 10 is an explanatory diagram illustrating an example of a state in which a palm of a left hand is in contact with an edge of the housing rear surface.

Here, a length L301 represents a length of a part in which the palm of the left hand is in contact with the edge of the housing rear surface.

In addition, a length L302 is a length of one of eight equal parts into which the length L301 is divided.

In addition, points P301 to P304 are points detected by the supporting-point position detecting unit 430 as the supporting-point positions of the fingers.

The supporting-point position detecting unit 430 detects the supporting-point position (point P301) at the position of the length L302 from the end of the part in which the palm is in contact with the edge of the housing rear surface. Likewise, the supporting-point position detecting unit 430 detects the supporting-point positions (points P302, P303, and P304) at positions of factors of 3, 5, and 7 of the length from the end of the part in which the palm is in contact with the edge of the housing rear surface. Here, thicknesses of the index finger, the middle finger, the ring finger, and the little finger are approximately the same. Thus, the supporting-point position detecting unit 430 is configured to detect the supporting-point position as described above by designating the thickness of each finger as a quarter of the length L301.

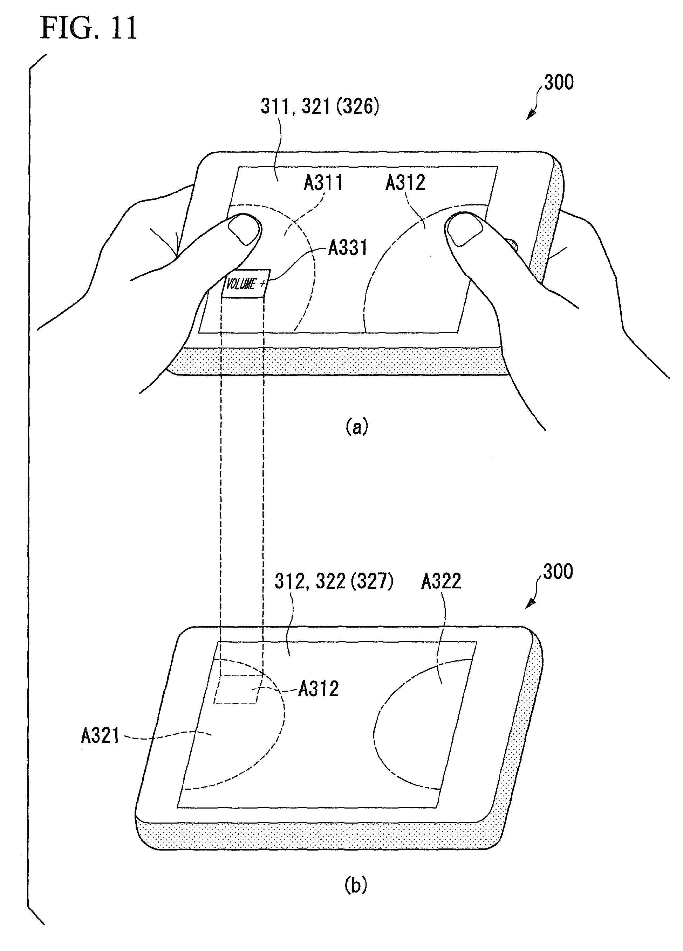

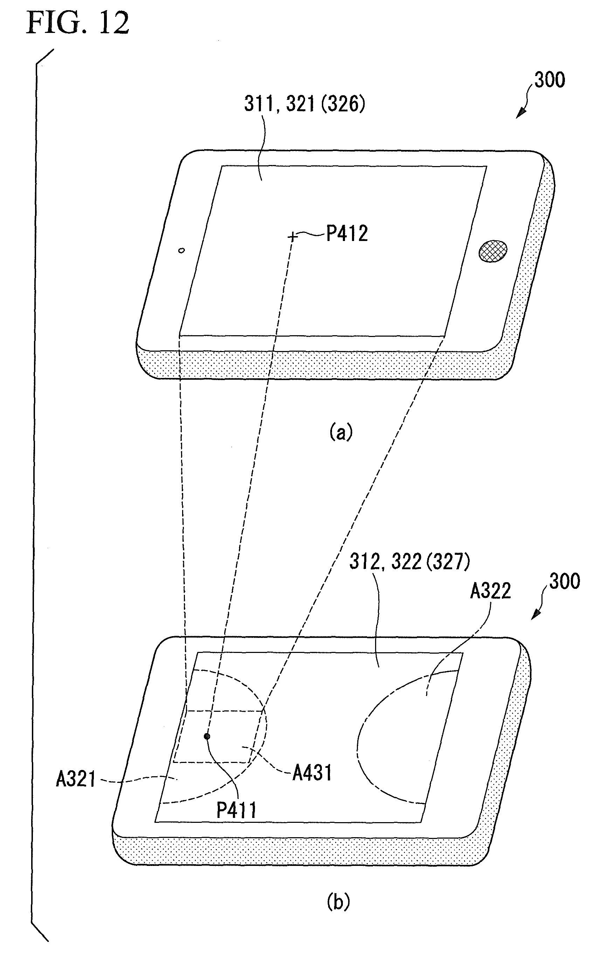

Next, the touch region set by the application processing unit 490 will be described with reference to FIGS. 11 and 12.

(a) and (b) of FIG. 11 are diagrams illustrating an example of a touch region configured by the application processing unit 490 by setting the display screen of the first display unit 311 as the front surface and setting the display screen of the second display unit 312 as the rear surface. (a) of FIG. 11 is a view of the portable terminal apparatus 300 viewed from the front surface, and the display screen of the first display unit 311 is shown. (b) of FIG. 11 is a view of the portable terminal apparatus 300 viewed from the rear surface, and the display screen of the second display unit 312 is shown.

In (a) of FIG. 11, regions A311 and A312 are regions representing the movable ranges of the thumbs acquired by the movable range acquiring unit 435 in the region of the display screen of the first display unit 311. In addition, in (b) of FIG. 11, regions A321 and A322 represent the movable ranges of the fingers (the fingers which perform touch operations; although the fingers will be described as the middle fingers hereinafter, other fingers or a touchable region of any one of a plurality of fingers may be used) acquired by the movable range acquiring unit 435 in the region of the display screen of the second display unit 312.

In addition, a region A331 in (a) of FIG. 11 is a touch region set by the application processing unit 490 on the display screen (front surface) of the first display unit 311. In addition, a region A332 in (b) of FIG. 11 is a touch region set by the application processing unit 490 on the display screen (rear surface) of the second display unit 312.

The application processing unit 490 sets the touch region A331 within the movable range of the thumb in the display screen of the first display unit 311 in (a) of FIG. 11. At this time, the application processing unit 490 sets the touch region A331 so that the region (the region A332 of (b) of FIG. 11) of the rear surface of the touch region A331 in (a) of FIG. 11 is included in the movable range of the middle finger in the display screen of the second display unit 312. Then, the application processing unit 490 also sets the rear surface region A332 of the touch region A331 as the touch region.

That is, the application processing unit 490 sets the touch region at a position at which the display screen of the first display unit 311 is set as the front surface and the display screen of the second display unit 312 is set as the rear surface, and sets each touch region at a position included in the movable range of the finger in the display screen of either of the first display unit 311 and the second display unit 312.

In this manner, the application processing unit 490 sets the touch region in the movable range of the finger in either display screen in front and rear surface regions in which the display screen of the first display unit 311 is configured as the front surface and the display screen of the second display unit 312 is configured as the rear surface, and therefore the user can intuitively identify that there is relevance between the touch regions and easily perform an operation.

For example, if the application processing unit 490 is configured to perform the same process when the first operation input unit 321 receives the touch operation in the region A331 and the second operation input unit 322 receives the touch operation in the region A332, the user can perform the touch operation by selecting either of the touch operation on the display screen of the first display unit 311 and the touch operation on the display screen of the second display unit 312. When the touch operation on the display screen of the first display unit 311 is performed, the user can more accurately perform the touch operation by viewing the touch position. In addition, when the touch operation on the display screen of the second display unit 312 is performed, the user can perform the touch operation while viewing the display screen of the first display unit 311 without blocking a field of view of the front surface with the finger.

On the other hand, if the application processing unit 490 is configured to perform different processes when the first operation input unit 321 receives the touch operation in the region A331 and when the second operation input unit 322 receives the touch operation in the region A332, the user can intuitively easily perform different operations on a predetermined region on the display screen (for example, the region A331 in which the icon is displayed in the display screen of the first display unit 311). For example, the application processing unit 490 processes the touch operation on the region A331 as a left click operation of the mouse (an operation of pressing a left button of the mouse) and processes the touch operation on the region A332 as a right click operation of the mouse (an operation of pressing a right button of the mouse), and therefore the user can easily perform different operations on the same region without using an instrument such as a mouse.

(a) and (b) of FIG. 12 are diagrams illustrating an example in which the application processing unit 490 sets a touch region in which a position is designated on the display screen of the first display unit 311 (a touch region for the purpose of a pointing device for the display screen of the first display unit 311) on the display screen of the second display unit 312. (a) of FIG. 12 is a view of the portable terminal apparatus 300 viewed from the front surface, and the display screen of the first display unit 311 is shown. (b) of FIG. 12 is a view of the portable terminal apparatus 300 viewed from the rear surface, and the display screen of the second display unit 312 is shown.

As in the case of (b) of FIG. 11, the regions A321 and A322 in (b) of FIG. 12 are regions representing movable ranges of the middle fingers acquired by the movable range acquiring unit 435 in the region of the display screen of the second display unit 312.

In addition, a region A431 is a touch region set by the application processing unit 490 on the display screen of the second display unit 312.

In addition, a position P411 in (b) of FIG. 12 represents a position at which the touch operation is performed in the region A431 of the second display unit 312, and a position P412 in (a) of FIG. 12 represents a position on the display screen of the first display unit 311 associated with the position P411 on the screen of the second display unit 312.

The application processing unit 490 sets the touch region A431 within the movable range of the middle finger in the display screen of the second display unit 312. Each part of the touch region A431 is associated with that of the display screen of the first display unit 311. Then, when the touch operation on the touch region A431 is performed, the application processing unit 490 displays a cursor at a position associated with a position at which the touch operation has been performed on the display screen of the first display unit 311. In the example of (a) and (b) of FIG. 12, the application processing unit 490 displays the cursor at a position P412 on the display screen of the first display unit 311 associated with the position P411 according to the touch operation at the position P411 of the display screen of the second display unit 312 which is the rear surface.

In this manner, the application processing unit 490 sets the touch region in which the position on the display screen of the first display unit 311 is designated within the movable range of the middle finger (the movable range of the finger which performs the touch operation) in the display screen of the second display unit 312 on the rear surface of the portable terminal apparatus 300, and therefore the user can easily designate the position on the display screen of the first display unit 311 of the front surface of the portable terminal apparatus 300. For example, the user can easily move a position of the cursor displayed on the display screen of the first display unit 311.

As described above, the finger length acquiring unit 425 acquires a length of at least one of an index finger, a middle finger, a ring finger, and a little finger, and the supporting-point position detecting unit 430 detects a supporting-point position of the finger when the finger moves in a state in which the portable terminal apparatus 300 is held. Then, the application processing unit 490 sets the touch region in which a touch operation serving as a predetermined input operation is received within the movable range of the finger obtained based on the supporting-point position of the finger and the length of the finger in the region in which the rear surface touch sensor 327 of the second operation input unit 322 can detect the touch.

Thereby, as described for the touch region of the front surface side in the first embodiment, the portable terminal apparatus 300 can also more appropriately set the touch region in which the touch operation serving as the predetermined input operation is received on the rear surface side. That is, the portable terminal apparatus 300 (movable range acquiring unit 435) can more accurately acquire the movable range of the finger based on the length of the finger and the supporting-point position of the finger. Then, the portable terminal apparatus 300 (application processing unit 490) can set the touch region at a position at which the user can easily perform the touch operation by setting the touch region within the obtained movable range of the finger.

In addition, as described for the touch region of the front surface side in the first embodiment, the portable terminal apparatus 300 can also prevent the touch operation from being erroneously detected by limiting a position at which the touch region is set to within the movable range of the finger in the rear surface side.

In addition, the application processing unit 490 sets the touch region within the movable range of the finger in either display screen in touch regions in which the display screen of the first display unit 311 is configured as the front surface and the display screen of the second display unit 312 is configured as the rear surface, and therefore the user can intuitively identify that there is relevance between the touch regions and easily perform an operation.

For example, if the application processing unit 490 is configured to perform the same process when the first operation input unit 321 receives the touch operation in the region A331 and the second operation input unit 322 receives the touch operation in the region A332, the user can perform the touch operation by selecting either of the touch operation on the display screen of the first display unit 311 and the touch operation on the display screen of the second display unit 312. When the touch operation on the display screen of the first display unit 311 is performed, the user can more accurately perform the touch operation by viewing the touch position. In addition, when the touch operation on the display screen of the second display unit 312 is performed, the user can perform the touch operation while viewing the display screen of the first display unit 311 without blocking a field of view of the front surface with the finger.

In addition, if the application processing unit 490 is configured to perform different processes when the first operation input unit 321 receives the touch operation in the region A331 and the second operation input unit 322 receives the touch operation in the region A332, the user can intuitively easily perform different operations on a predetermined region on the display screen.

Also, in a state in which the first display unit 311 displays a browser image on the display screen, the application processing unit 490 may be configured to set the touch region of a return operation of the browser function (an operation of displaying the browser image of an immediately previously displayed screen (web page or the like)) within the movable range of the finger in the display screen of the second display unit 312. For example, the application processing unit 490 sets the overall movable range of the finger in the display screen of the second display unit 312 in the touch region of the return operation.

Then, the application processing unit 490 causes the first display unit 311 to display the browser image of the immediately previously displayed screen when the touch operation on the set touch region is performed. That is, the application processing unit 490 returns the screen displayed by the first display unit 311.

Thereby, the user, for example, can return the screen displayed on the browser in an easy operation such as a touch operation with the index finger or the middle finger.

Also, in a state in which the application processing unit 490 causes the display screen of the first display unit 311 to display the cursor and move (scroll) the cursor according to a housing tilt of the portable terminal apparatus 300 detected by the tilt detecting unit 460, that is, in a state in which the gravity scroll is performed, the application processing unit 490 may be configured to set the touch region of a cursor (scroll) stop operation within the movable range of the finger in the display screen of the second display unit 312. For example, the application processing unit 490 sets the overall movable range of the finger in the display screen of the second display unit 312 in the touch region of the cursor stop operation.

Then, when the touch operation on the set touch region is performed, the application processing unit 490 stops the cursor to be displayed on the display screen of the first display unit 311. That is, the application processing unit 490 causes the gravity scroll to be stopped.

Thereby, the user, for example, can stop the cursor with an easy operation such as a touch operation with the index finger or the middle finger.

Also, processing of each unit may be implemented by recording a program for implementing all or some of the functions of the control unit 180 or 380 on a computer-readable recording medium and causing a computer system to read and execute the program recorded on the recording medium. Also, the "computer system" described here is assumed to include an operating system (OS) and hardware such as peripheral devices.

In addition, the "computer system" is assumed to include a homepage providing environment (or displaying environment) when a World Wide Web (WWW) system is used.

In addition, the "computer-readable recording medium" refers to a storage device including a flexible disk, a magneto-optical disc, a read only memory (ROM), a portable medium such as a compact disc (CD)-ROM, and a hard disk embedded in the computer system. Further, the "computer-readable recording medium" is assumed to include a computer-readable recording medium for dynamically holding a program for a short time as in a communication line when the program is transmitted via a network such as the Internet or a communication circuit such as a telephone circuit and a computer-readable recording medium for holding the program for a predetermined time as in a volatile memory inside the computer system including a server and a client when the program is transmitted. In addition, the above-described program may be used to implement some of the above-described functions. Further, the program may implement the above-described functions in combination with a program already recorded on the computer system.

Although the embodiments of the present invention have been described above with reference to the drawings, specific configurations are not limited to the embodiments, and a design change and the like may also be included without departing from the scope of the present invention.

Priority is claimed on Japanese Patent Application No. 2011-210586, filed September 27, 2011, the content of which is incorporated herein by reference.

### INDUSTRIAL APPLICABILITY

According to a portable information apparatus having a touch sensor related to the present invention, a touch region in which a touch operation is received can be more appropriately set.

### [Description of Reference Symbols]

- 100: Portable terminal apparatus
- 110: Display unit
- 120: Operation input unit
- 130: Side surface sensor unit
- 141: Sound input unit
- 142: Sound output unit
- 150: Wireless communication unit
- 180: Control unit
- 190: Storage unit
- 210: Display control unit
- 220: Input processing unit
- 225: Finger length acquiring unit
- 230: Supporting-point position detecting unit
- 235: Movable range acquiring unit
- 240: Sound processing unit
- 250: Communication control unit
- 290: Application processing unit
- 300: Portable terminal apparatus
- 311: First display unit
- 312: Second display unit
- 321: First operation input unit
- 322: Second operation input unit
- 360: Gravity sensor unit
- 380: Control unit
- 410: Display control unit
- 420: Input processing unit
- 425: Finger length acquiring unit
- 430: Supporting-point position detecting unit
- 435: Movable range acquiring unit
- 460: Tilt detecting unit
- 490: Application processing unit

## Claims

1. A portable electronic apparatus comprising:
a touch sensor configured to detect a touch position;
a supporting-point position detecting unit configured to detect a supporting-point position of a user's finger when the finger moves in a state in which the portable electronic apparatus is held;
a user's finger length acquiring unit configured to acquire the length of the finger; and
a touch region setting unit configured to set a touch region in which a touch operation serving as a predetermined input operation is received within a movable range of the finger obtained based on the supporting-point position of the finger and the length of the finger in a region in which the touch sensor is able to detect a touch.

2. The portable electronic apparatus according to claim 1,
wherein the touch sensor is a front surface touch sensor which is a touch input apparatus capable of performing an operation with a thumb of a hand with which the portable electronic apparatus is held,
wherein the supporting-point position detecting unit detects a supporting-point position of the thumb,
wherein the finger length acquiring unit acquires a length of the thumb, and wherein the touch region setting unit sets the touch region in the front surface touch sensor within a movable range of the thumb obtained based on the supporting-point position of the thumb and the length of the thumb in the region in which the touch sensor is able to detect the touch.

3. The portable electronic apparatus according to claim 2, further comprising:
a rear surface touch sensor which is the touch sensor operable with any one of an index finger, a middle finger, a ring finger, and a little finger of the hand with which the portable electronic apparatus is held,
wherein the supporting-point position detecting unit detects a supporting-point position of at least one of the index finger, the middle finger, the ring finger, and the little finger,
wherein the finger length acquiring unit acquires the length of the finger of the supporting-point position detected by the supporting-point position detecting unit, and
wherein the touch region setting unit sets a touch region in the rear surface touch sensor in the movable range of the finger obtained based on the supporting-point position of the finger detected by the supporting-point position detecting unit and the length of the finger acquired by the finger length acquiring unit in a region in which the rear surface touch sensor is able to detect the touch.

4. The portable electronic apparatus according to claim 3, comprising:
a display unit having a display screen; and
a display control unit configured to cause a cursor to be displayed at a position according to the touch position of the display screen when the rear surface touch sensor detects the touch position within the touch region set by the touch region setting unit.

5. The portable electronic apparatus according to claim 3, comprising:
a display unit having a display screen;
a display control unit configured to cause the display screen to display an icon;
and
a processing unit configured to perform a process according to the touch operation detected by the front surface touch sensor and the touch operation detected by the rear surface touch sensor,
wherein the front surface touch sensor is provided on the display screen,
wherein the rear surface touch sensor is provided on a rear surface of the display screen, and
wherein the processing unit performs different processes when the front surface touch sensor receives the touch operation in a display region of the icon and when the rear surface touch sensor receives the touch operation in a rear surface region of the display region of the icon.

6. The portable electronic apparatus according to claim 3, comprising:
a display unit having a display screen; and
a processing unit configured to cause the display unit to display a browser image of an immediately previously displayed screen when the rear surface touch sensor detects a touch position within the touch region set by the touch region setting unit in a state in which the display unit displays the browser image on the display screen.

7. The portable electronic apparatus according to claim 4, comprising:
a tilt detecting unit configured to detect a tilt of a housing of the portable electronic apparatus, and
a display control unit configured to cause the display screen to display a cursor, move the cursor according to the tilt detected by the tilt detecting unit, and stop the cursor when the rear surface touch sensor detects the touch operation within the touch region set by the touch region setting unit.

8. The portable electronic apparatus according to claim 3,
a display unit having a display screen;
a display control unit configured to cause the display screen to display an icon; and
a processing unit configured to perform a process according to the touch operation detected by the front surface touch sensor and the touch operation detected by the rear surface touch sensor,
wherein the front surface touch sensor is provided on the display screen, wherein the rear surface touch sensor is provided on a rear surface of the display screen, and
wherein the processing unit performs the same process when the front surface touch sensor receives the touch operation in a display region and when the rear surface touch sensor receives the touch operation in a rear surface region of the display region.

9. A touch region setting method of a portable electronic apparatus having a touch sensor configured to detect a touch position, the touch region setting method comprising:
a supporting-point position detecting step of detecting a supporting-point position of a user's finger when the finger moves in a state in which the portable electronic apparatus is held;
a finger length acquiring step of acquiring the length of the finger; and
a touch region setting step of setting a touch region in which a touch operation serving as a predetermined input operation is received within a movable range of the finger obtained based on the supporting-point position of the finger and the length of the finger in a region in which the touch sensor is able to detect a touch.

10. A computer-readable recording media having stored thereon a touch region setting program that, when executed on a computer, causes the computer serving as a portable electronic apparatus having a touch sensor configured to detect a touch position to execute:
a supporting-point position detecting step of detecting a supporting-point position of a user's finger when the finger moves in a state in which the portable electronic apparatus is held;
a finger length acquiring step of acquiring the length of the finger; and
a touch region setting step of setting a touch region in which a touch operation serving as a predetermined input operation is received within a movable range of the finger obtained based on the supporting-point position of the finger and the length of the finger in a region in which the touch sensor is able to detect a touch.
